(19) Europäisches Patentamt
European Patent Office
Office européen des brevets

(11) **EP 4 782 878 A1**

(12) **EUROPEAN PATENT APPLICATION**

(43) Date of publication:
**29.07.2026 Bulletin 2026/31**

(21) Application number: **25227364.4**

(22) Date of filing: **29.12.2025**

(51) International Patent Classification (IPC):
**G01S 7/487** (2006.01)  **G01S 17/18** (2020.01)
**G01S 17/46** (2006.01)  **G01S 17/89** (2020.01)

(52) Cooperative Patent Classification (CPC):
**G01S 17/46; G01S 7/4876; G01S 17/18;
G01S 17/89**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.01.2025 JP 2025008943**

(71) Applicant: **Canon Kabushiki Kaisha
Tokyo, 146-8501 (JP)**

(72) Inventor: **NAKAZAWA, Tomonori
Tokyo, 146-8501 (JP)**

(74) Representative: **TBK
Bavariaring 4-6
80336 München (DE)**

(54) **IMAGE CAPTURING APPARATUS, MOVABLE APPARATUS, IMAGE CAPTURING METHOD, AND STORAGE MEDIUM**

(57) An image capturing apparatus that has a light emitting unit configured to emit pulsed light; and an image capturing unit configured to expose reflected light in which the pulsed light has been reflected from around a subject, and generate an image signal, performs control of a light emission timing for the light emitting unit and an exposure timing for the image capturing unit such that the image capturing unit exposes light that has been reflected from a subject in a predetermined distance range from the image capturing unit; performs predetermined calculation processing on images obtained from the image signal; and determines a calculation processing range in which the calculation processing will be performed based on the predetermined distance range.

FIG. 8

```
        ┌─────────┐
        │  START  │
        └────┬────┘
             │
┌────────────────────────────────────┐
│ DETERMINE HEIGHT Hc FOR CAMERA 100 │──S11
└────────────────┬───────────────────┘
                 │
┌────────────────────────────────────┐
│ DETERMINE LIGHT EMISSION TIME PERIOD FOR THE │
│ LIGHT EMITTING DEVICE 200, AND EXPOSURE TIME │──S12
│ PERIOD/EXPOSURE TIMING FOR THE CAMERA 100    │
└────────────────┬───────────────────┘
                 │
┌────────────────────────────────────┐
│ ACQUIRE IMAGE SIGNAL BY CAPTURING IMAGES │──S13
│      DURING RANGE GATE CONTROL           │
└────────────────┬───────────────────┘
                 │
┌────────────────────────────────────┐
│ DETERMINE CALCULATION PROCESSING RANGE │
│ IN WHICH CALCULATION WILL BE PERFORMED AT │──S14
│ A LATER STAGE FROM AMONG IMAGE SIGNAL     │
└────────────────┬───────────────────┘
                 │
┌────────────────────────────────────┐
│ PERFORM CALCULATION PROCESSING FOR │
│ CALCULATION PROCESSING RANGE THAT HAS │──S15
│           BEEN CALCULATED             │
└────────────────┬───────────────────┘
                 │
         ┌───────────┐
         │    END    │
         └───────────┘
```

EP 4 782 878 A1

**Description**

TECHNICAL FIELD

The present disclosure relates to an image capturing apparatus, a movable apparatus, an image capturing method, a storage medium, and the like.

BACKGROUND

In recent years, distance measuring camera systems that use a triangulation principle and serve as an apparatus for performing distance measurements for until a subject are being built into a large number of autonomous vehicles in order to realize advanced driver assistance safety systems (ADAS) functions. As examples of a distance measuring camera system, there are stereo camera systems, and image capturing plane phase difference camera systems.

In a stereo camera system, two cameras are parallelly disposed by being separated by just a predetermined interval, a deviation amount is detected according to the parallax for subjects that have been captured in the images that were captured by each camera, and the distance until the subject is calculated based on these deviation amounts.

In an image capturing plane phase difference distance measurement camera system, image capturing is performed by one camera that has been provided with an image capturing element that is referred to as an image capturing plane phase difference element, deviations are detected according to parallax for image signals that are generated by light that has passed through an image forming optical system becoming incident on a plurality of pixels that have been formed on the image capturing element, and the distance until a subject is calculated based on these deviations.

There is a possibility that when weather conditions are poor, these distance measuring camera systems will incorrectly calculate the distance until a subject. Specifically, poor weather conditions are states in which the visibility of the subject is hindered by particles such as rain, haze, snow, and the like.

In the above-described camera systems, there are cases in which if light for which diffused reflection has occurred off of the particles that are in front of the subject is image captured by the camera, an image signal for an article other than the subject is generated, and the distance until the subject cannot be precisely calculated due to the effects of this image signal.

In contrast, there is an image capturing technology that uses a camera referred to as a range gated camera. This is a technology that captures clear images of just subjects within a target distance range by emitting pulsed light in front of the camera for a predetermined time period, and exposing the image capturing element in the camera with just the light that has been reflected within the target distance range. Below, the above-described technology will be referred to as range gate control. For example, according to this range gate control, it is possible to capture clear images of a subject that is at a predetermined distance even if there are poor weather conditions.

In Japanese Patent No. 6293134, range gate control is combined with a distance measuring camera system, and an image capturing apparatus is proposed that is able to both capture images at a long distance and measure distance when there are poor weather conditions.

However, in a case in which range gate control is combined with a distance measuring camera system, in addition to the calculations that perform the distance measurement in the distance measuring camera, calculations for performing image capturing according to the range gate control also become necessary, and therefore, there is the problem that the total calculation processing amount for the system will increase. Therefore, the scale of the calculation processing circuits that are needed for the calculation processing becomes large, and there is a tendency for the energy for the calculation processing circuit to increase as well.

SUMMARY

An image capturing apparatus according to one aspect of the present disclosure comprises a light emitting unit configured to emit pulsed light; and an image capturing unit configured to expose reflected light in which the pulsed light has been reflected from around a subject, and generate an image signal; wherein the image capturing apparatus performs control of light emission timing for the light emitting unit and exposure timing for the image capturing unit such that the image capturing unit exposes light that has been reflected from a subject that is within a predetermined distance range from the image capturing unit; performs predetermined calculation processing on images that are obtained from the image signal; and determines a calculation processing range in which the calculation processing is performed based on the predetermined distance range.

Further features of the present disclosure will become apparent from the following description of embodiments with reference to the attached drawings.

## BRIEF DESCRIPTION OF THE DRAWINGS

FIG. 1 is a functional block diagram showing a configurational example of a camera 100, a light emitting device 200, and a movable apparatus 300 according to a First Embodiment.

FIG. 2A is a top view diagram of a photoelectric conversion element 102 as seen from an incidence direction of light, and FIG. 2B is a cross section diagram at an I-I' cross section of a pixel 400 from FIG. 2A.

FIG. 3A to FIG. 3D are diagrams for explaining a relationship between a subject distance and incident light in an image capturing plane phase difference method.

FIG. 4 is a diagram showing an example of a relationship between traveling of reflected light and light emission timing in range gate control.

FIG. 5 is a diagram showing an example of light emission and exposure (charge accumulation) control for a one frame time period in range gate control.

FIG. 6 is a diagram showing an example of a relationship between a ranged range and an image capturing angle of view for the time of image capturing in range gate control according to the First Embodiment.

FIG. 7A, and FIG. 7B are diagrams showing an image range that is obtained at the time of image capturing with range gate control according to the First Embodiment.

FIG. 8 is a flowchart showing an example of processing for an image capturing method according to the First Embodiment.

FIG. 9 is a diagram showing an example of a relationship between a ranged range and the image capturing angle of view at the time of image capturing in range gate control according to a Second Embodiment.

FIG. 10A, and 10B are diagrams showing an image range that is obtained at the time of image capturing with range gate control according to the Second Embodiment.

FIG. 11 is a flowchart showing an example of processing for an image capturing method according to the Second Embodiment.

## DESCRIPTION OF THE EMBODIMENTS

Hereinafter, with reference to the accompanying drawings, favorable modes of the present disclosure will be described using Embodiments. In each diagram, the same reference signs are applied to the same members or elements, and duplicate description will be omitted or simplified.

<First Embodiment>

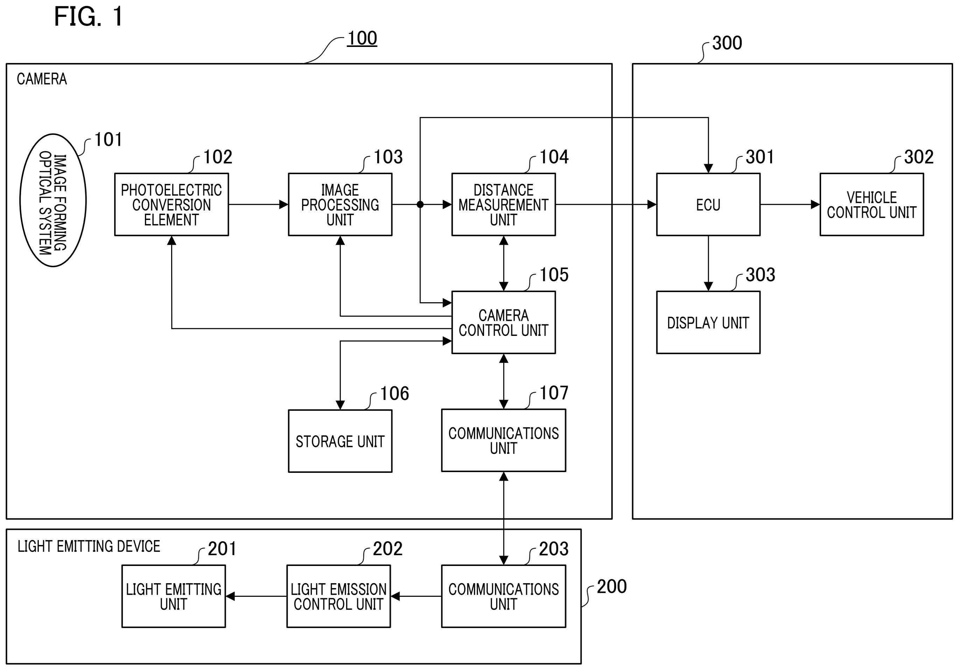

FIG. 1 is a functional block diagram showing configurational examples of the camera 100, the light emitting device 200, and the movable apparatus 300 according to the First Embodiment. Note that the camera 100 functions as an image capturing apparatus.

In addition, the present embodiment is explained using an example of, for example, a vehicle such as an autonomous vehicle and the like as the movable apparatus 300. However, the movable apparatus may be any article as long as it is an apparatus that can be moved, such as a train, a ship, an airplane, a robot, a drone, an AGV (automated guide vehicle), an AMR (autonomous mobile robot), and the like.

Note that a portion of the functional blocks that are shown in FIG. 1 are realized by a computer that is not shown that is included in the camera 100, the light emitting device 200, and the movable apparatus 300 executing a computer program that has been stored on a memory that serves as a storage medium that is also not shown.

However, a portion or the entirety of these blocks may also be made so as to be realized by hardware. As the hardware, an application specific integrated circuit (ASIC), a processor (a reconfigurable processor, a DSP), and the like can be used.

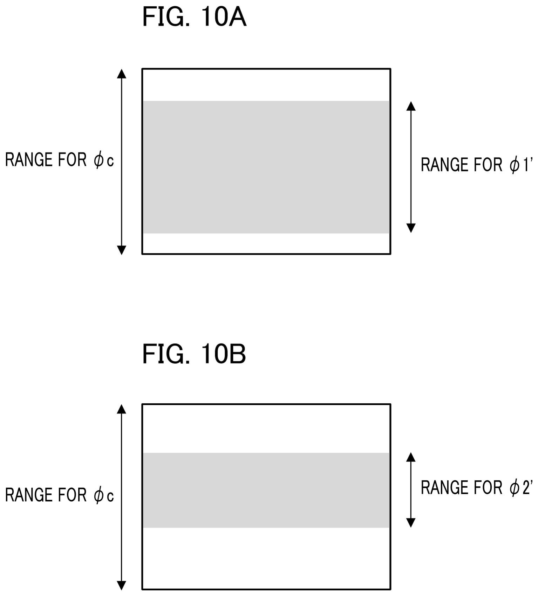

In addition, each block that is shown in FIG. 1 does not need to be housed in the same body, and may also be configured by separate apparatuses that have been connected to each other by signal paths. Note that the above explanation in relation to FIG. 1 also applies in the same manner to FIG. 10.

The camera 100 has an image forming optical system 101, a photo electric conversion element 102, an image processing unit 103, a distance measurement unit 104, a camera control unit 105, a storage unit 106, a communications unit 107, and the like. The photoelectric conversion element 102 functions as an image capturing unit configured to expose reflected light in which pulsed light has been reflected from around a subject, and generate an image signal.

The image forming optical system 101 is able to form images (optical images) of subjects on the photoelectric conversion element 102, and has an exit pupil in a position that is separated from the photoelectric conversion element 102 by a predetermined distance.

The photoelectric conversion element 102 is, for example, a semiconductor image sensor element such as a CMOS (Complementary Metal Oxide Semiconductor) sensor, and the like. The photoelectric conversion element 102 is provided with a pixel region in which, for example, pixels having photoelectric conversion functions have been two-dimensionally disposed.

The photoelectric conversion element 102 of the present embodiment uses an image capturing plane phase difference measurement method image capturing element as a stereo camera system. That is, each pixel region has one microlens and two photoelectric conversion units, and generates a first image signal and a second image signal by photoelectrically converting each subject image having parallax that has been formed on the photoelectric conversion element 102.

Note that although in the image capturing plane phase difference method photoelectric conversion element 102 according to the present embodiment, each pixel region has one microlens and two photoelectric conversion units, the present disclosure is not limited thereto, and it is sufficient if each pixel region has at least two photoelectric conversion units. For example, the image capturing place phase difference method may also be realized by a quad pixel structure having one microlens and four photoelectric conversion units.

In this manner, the photoelectric conversion element 102 that serves as an image capturing unit generates a first image signal and a second signal having a predetermined parallax. However, note that the stereo camera system is not limited thereto, and, for example, a stereo camera consisting of two cameras having parallax may also be used.

In addition, although athe image capturing plane phase difference method image capturing element as was described above has two photoelectric conversion units, the present disclosure is not limited thereto, and it is sufficient if the image capturing element has at least one photoelectric conversion unit. For example, the image capturing plane phase difference method may also be realized with a quad pixel structure.

The image processing unit 103 performs image processing on the image signal that has been generated by the photoelectric conversion element 102 such as, for example, black level correction, gamma curve adjustment, noise reduction, digital gain adjustment, de-mosaic processing, data compression, and the like, and generates a final image signal. The output from the image processing unit 103 is supplied to the measurement unit 104, an ECU 301 (electric control unit) of the movable apparatus 300, and the camera control unit 105.

The distance measurement unit 104 performs object recognition processing for surrounding persons, vehicles, and the like by performing image recognition based on the first image signal and the second image signal that have been supplied from the image processing unit 103. In addition, the distance until the objects is calculated based on an image phase deviation according to the parallax for the first image signal and the second image signal that have been supplied from the image processing unit 103.

That is, the distance measurement unit 104 calculates a distance value for until a subject and a degree of reliability for the distance value based on the first image signal and the second image signal. Note that the image processing unit 103 and the distance measurement unit 104 function as a calculation processing unit that performs predetermined calculation processing (image processing, image recognition, distance measurement, and the like) on images that have been obtained from the image signal.

The camera control unit 105 has a built in CPU that serves as a computer and a memory that stores computer programs, and performs control of each unit of the camera 100 by the CPU executing the computer program that has been stored on the memory.

Note that the camera control unit 105 functions as a control unit, and performs control of the length of the exposure periods for each frame (electric charge accumulation time periods), and control signal timing by transmitting a reference signal to the camera 100 that is repeatedly output at predetermined intervals.

Note that exposure in the following explanation means operations from the beginning until the completion of electric charge accumulation, photoelectric conversion, and image capturing in the photoelectric conversion element 102. Note that in the present embodiment, electric charge accumulation, photoelectric conversion, and image capturing are used as having the same meaning, and in addition, in a case in which for example, the photoelectric conversion element 102 is an APD, the electric charge accumulation, photoelectric conversion, and image capturing operations include count operations in which the signals that have been photoelectrically converted are counted in a counter 211 circuit.

In addition, the camera control unit 105 outputs a pulse signal at a predetermined timing that has been synchronized with the reference signal to the light emitting unit 201, and controls the light emission period of the light emitting device 200 by setting a predetermined value for a light emission control unit 202 via the communications unit 107, and the communications unit 203.

In this manner, a reference signal that has been synchronized with the reference signal that was transmitted to the photoelectric conversion element 102 is also transmitted to the light emitting device 200, and light emission control is performed by synchronizing the light emitting device 200 with the reference signal. It thereby becomes possible to synchronize the exposure timing of the photoelectric conversion element 102 and the light emission timing of the light emitting device 200.

In this context, the camera control unit 105 functions as a control unit configured to execute a control step for controlling a light emission timing of a light emission unit and an exposure (electric charge accumulation) timing of the image capturing unit such that the image capturing unit exposes (accumulates an electric charge) reflected pulsed light from around a subject within a predetermined distance range.

The storage unit 106 for example, includes a storage medium such as a memory card, a hard disk, and the like, and is able to store and read out image signals. The communications unit 107 is provided with a wired and wireless interface, and outputs the image signals that have been generated to outside of the camera 100 and also receives each type of signal from outside of the camera 100.

In addition, the communications unit 107 in the present embodiment is connected to the communications unit 203 of the light emitting device 200, and also takes on the role of transmitting the reference signal and transmitting control commands from the camera control unit 105 to the light emitting device 200.

The light emitting device 200 has a light emitting unit 201 that emits pulsed light, the light emission control unit 202, and the communications unit 203. The light emitting unit 201 is for example, a near infrared LED that has been positioned behind the movable apparatus 300, and is configured by being combined with the lens.

The wavelengths of the pulsed light that is irradiated by the light emitting unit 201 is not limited to near infrared wavelengths, and for example, may also be wavelengths in a visible light region. In addition, the light emitting unit 201 may also be made so as to change the intensity of the emitted light from, for example, a head light serving as the light emitting device that has been provided to the movable apparatus 300. Note that the light emitting unit 201 outputs pulsed light during a predetermined light emission time period according to a pulse signal that is output from the light emission control unit 202.

The light emission control unit 202 receives the reference signal that has been transmitted by the camera control unit 105 of the camera 100 via the communications unit 203, generates a pulse signal at a predetermined timing with this reference signal as a reference, and outputs the pulse signal to the light emitting unit 201.

In this context, from the reference signal, the light emission control unit 202 is able to set a period until the pulse signal is output, a pulse output width, a pulse non-output width, and a repetition cycle and number of repetition times from the output of the pulse until the output of the next pulse.

The camera control unit 105 outputs the pulse signal to the light emitting unit 201 at a predetermined timing using the reference signal as a reference, and controls the light emission period of the light emitting device 200 by setting a predetermined value for the light emission control unit 202 via the communications unit 107, and the communications unit 203. In this manner, the light emission control unit 202 is light emission controlled using a signal that is the same as the reference signal that has been input into the camera 100 as a reference.

The communications unit 203 communicates with the communications unit 107 of the camera 100, receives settings information for the light emission control unit 202 and the reference signal from the camera control unit 105, and transmits these to the light emission control unit 202.

The ECU 301 has a built in CPU that serves as a computer and a memory that stores a computer program, and performs control of each unit of a vehicle control unit 302 by the CPU executing the computer program that has been stored on the memory.

The output of the distance measurement unit 104 is supplied to the camera control unit 105 and is also supplied to the vehicle control unit 302 and a display unit 303 via the ECU 301. The vehicle control unit 302 functions as a movement control unit configured to perform drive, stopping, directional control, and the like of a vehicle that serves as a movable apparatus based on the outputs of the ECU 301. In addition, the display unit 303 functions as a display unit, includes a display element such as, for example, a liquid crystal device, an organic EL, and the like, and is built into the movable apparatus 300.

In the present embodiment, the ECU 301 receives information for measurement results from the measurement unit 104, and is able to execute stopping control (automatic breaking, and the like), for a vehicle according to the contents of the measurement results. In addition, the ECU 301 receives measurement processing data from the distance measurement unit 104 and transmits this data to the display unit 303.

The display unit 303 uses, for example, a GUI, and displays images that have been generated by the photoelectric conversion element 102, measurement results from the distance measurement unit 104, and each type of information relating to a travelling state of the vehicle, and the like, to an operator of the movable apparatus 300 based on the outputs of the ECU 301.

Note that the image processing unit 103, the distance measurement unit 104, and the like in FIG. 1 do not need to be built into the movable apparatus 300, and for example, may also be provided to an external terminal and the like for remotely controlling the movable apparatus 300, and an external terminal and the like for monitoring the travelling of the movable apparatus, which have been provided separately from the movable apparatus 300.

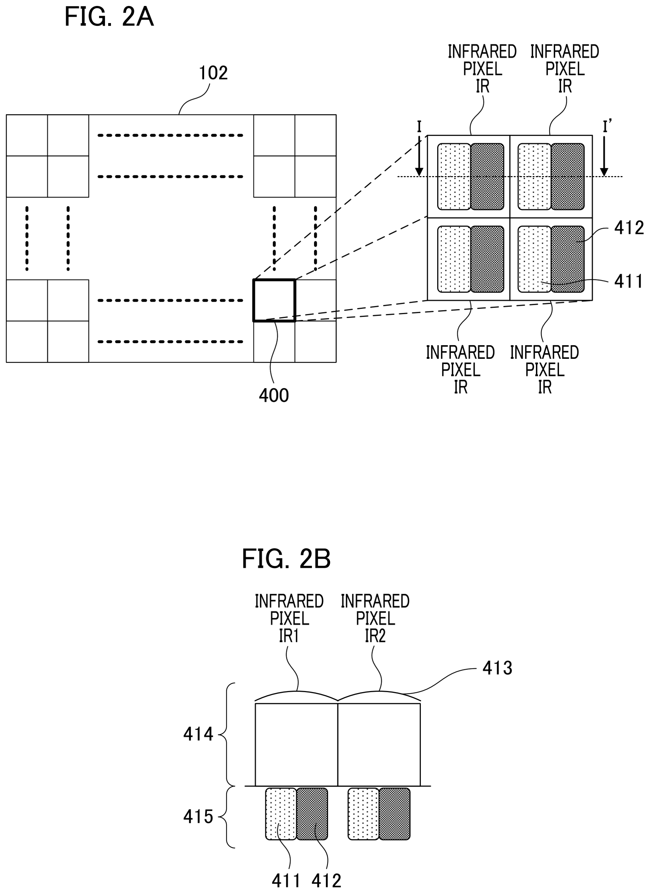

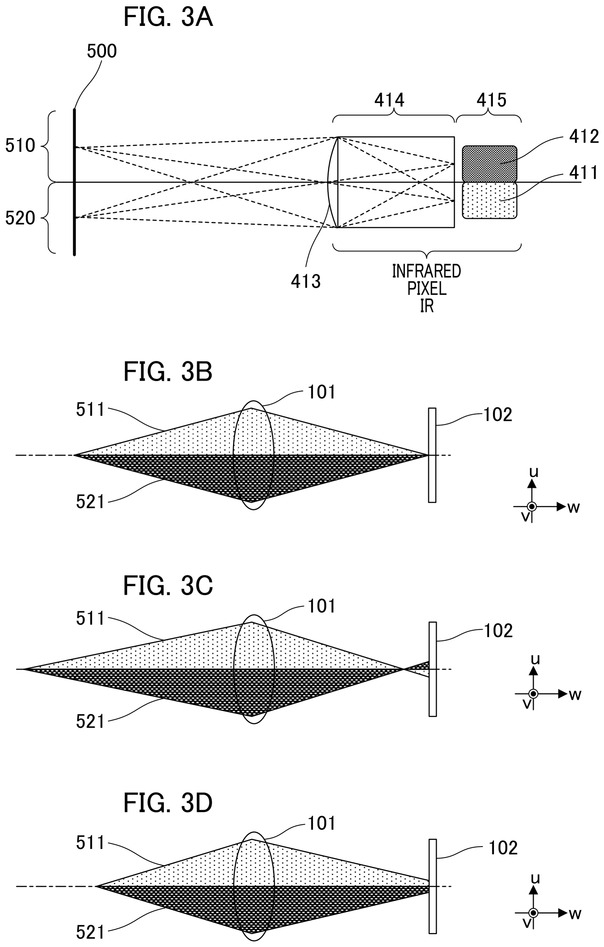

In this context, FIG. 2, and FIG. 3 will be used to explain the distance measurement principle according to the image capturing plane phase difference method that uses the photoelectric conversion element 102. FIG. 2 (A) is a top view diagram as seen from a direction of incidence of light into the photoelectric conversion element 102, and FIG. 2 (B) is an I-I' cross section diagram of FIG. 2 (A).

As is shown in FIG. 2 (A), the photoelectric conversion element 102 is configured by arranging a plurality of $2\times2$ pixel groups 400 on a matrix. The pixel groups 400 have four infrared pixels IR that detect IR light. In addition, each pixel has a first photoelectric conversion unit 411 and a second photoelectric conversion unit 412. Note that the placement of each pixel in the pixel groups 400 is not limited thereto, and this may also be changed according to the wavelength band of the light that is emitted from the light emitting device 200.

That is, the pixel group 400 may also have, for example, an infrared pixel IR that detects IR light, a red pixel that detects red light, a green pixel that detects green light, and a blue pixel that detects blue light. In addition, a pixel group 400 may also have two green pixels that detect green light, a red pixel that detects red light, and a blue pixel that detects blue light. In the case of the above-described pixel arrangement, the two green pixels are arranged in opposing corners.

As has been described above, FIG. 2 (B) is a cross section diagram at an I-I' cross section of the pixel group 400. Each pixel is configured by a light guiding layer 414 that includes a microlens 413, and a light receiving layer 415.

The light guiding layer 414 consists of the microlens 413 for efficiently guiding the light that has become incident on the pixel into the light receiving layer 412, a color filter that allows light to pass through from the wavelength band that is detected by each pixel, and a light guiding member that has wiring for use in pixel read out and pixel drive. The light receiving layer 415 photoelectrically converts the light that has become incident via the light guiding layer 414 and outputs this as an electric signal. The light receiving layer 415 has a first photoelectric conversion unit 411 and a second photoelectric conversion unit 412.

FIGS. 3 (A) to (D) are diagrams for explaining a relationship between a subject distance and incident light in the image capturing plane phase difference method. FIG. 3 (A) is a schematic diagram showing an exit pupil 500 of the image forming optical system 101, and light that has become incident on the first photoelectric conversion unit 411 and the second photoelectric conversion unit 412 of the infrared pixel IR of the photoelectric conversion element 102. Although the photoelectric conversion element 102 has a plurality of pixels, this has been simplified, and an explanation is given with respect to one infrared pixel IR.

The microlens 413 of the infrared pixel IR is positioned such that the exit pupil 500 and the light receiving layer have an optical conjugation relationship. As a result of this, light that has passed through a first pupil region 510, which is a partial pupil region that is included in the exit pupil 500 becomes incident on the first photoelectric conversion unit 411, and light that has passed through a second pupil region 520 becomes incident on the second photoelectric conversion unit 412.

The light that has been received by the first photoelectric conversion unit 411 of each pixel is photoelectrically converted and output as a signal. A first image signal is generated from the signals that have been output from the plurality of first photoelectric conversion units 411 that are included in the photoelectric conversion element 102. The first image signal represents the intensity distribution of a first image that is formed on the photoelectric conversion element 102 by the light that has primarily passed through the first pupil region 510.

The light that has been received by the second photoelectric conversion units 412 of each pixel is photoelectrically converted and output as a signal. The second image signal is generated from the signals that have been output from the plurality of second photoelectric conversion units 412 that are included in the photoelectric conversion element 102. The second image signal represents the intensity distribution for a second image that is formed on the photoelectric conversion element 102 by the light that has primarily passed through the second pupil region 520.

The relative positional deviation amount (referred to below as a parallax amount) for the first image signal and the second image signal becomes an amount that corresponds to the defocus amount. The relationship between the parallax amount and the defocus amount will be explained using FIGS. 3(B) to (D).

FIG. 3 (B), (C), (D) are schematic diagrams that show the photoelectric conversion element 102 and the image forming optical system 101. 511 in the diagrams shows a first light that passes through the first pupil region 510, and 521 shows a second light that passes through the second pupil region 520.

FIG. 3 (B) shows a state at the time of focusing, and the first light 511 and the second light 521 are converging on the photoelectric conversion element 102. At this time, the parallax amount between the first image signal that is formed by the first light 511 and the second image signal that is formed by the second light 521 becomes 0.

FIG. 3 (C) shows a defocused state on the image side in the negative direction of the w axis. At this time, the parallax amount between the first image signal that is formed by the first light 511 and the second image signal that is formed by the second light 521 does not become 0, and has a negative value.

FIG. 3 (D) shows a defocused state in the positive direction of the w axis on the image side. At this time, the parallax amount between the first image signal that is formed by the first light 511 and the second image signal that is formed by the second light 521 does not become 0, and has a positive value.

From comparing FIG. 3 (C) and (D) it can be understood that the direction in which parallax occurs changes according to whether the defocus amount is positive or negative. In addition, it can be understood from the mechanical relationship that the parallax amount occurs according to the defocus amount.

Therefore, the parallax amount for between the first image signal and the second image signal is detected according to a region based matching method, for example, a block matching method, and this can be converted into the defocus amount. The block matching in this context is a method in which comparison is performed in relation a region that has been selected in one image with a region having a high degree of similarity from another image (referred to below as a parallax comparison region), and the positional deviation with this region that has a high degree of similarity is made the parallax.

By further using the image forming formula of the image forming optical system 101, it is possible to convert the defocus amount on the image side into the distance until the subject. If the focal distance of the photoelectric conversion element 102 is made f, the distance from the image side principal point until the photoelectric conversion element 102 is made Ipp, the defocus amount is made $\triangle L$, and the distance until the object is made D, then the image forming formula of the image forming optical system 101 is represented by the following Formula 1

$$D = \frac{1}{\left\{ \frac{1}{f} - 1 \diagup (Ipp + \Delta L) \right\}}$$

(Formula 1)

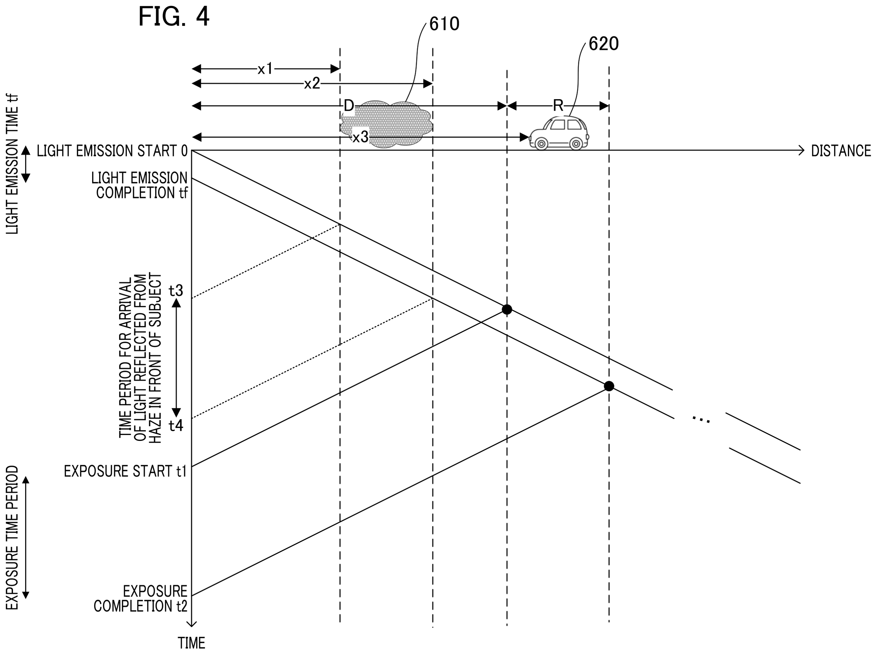

Next, FIG. 4 is a diagram showing an example of a relationship between traveling of the reflected light and the exposure timing during range gate control, and shows the relationship between the irradiated light from the light emitting device 200, the traveling of the reflected light therefrom, and the exposure timing for the camera 100. Note that in FIG. 4, the horizontal axis represents distance, and the vertical axis represents time.

In FIG. 4, a method is explained in which an image that has been captured at a target distance (a range gated image) is acquired by performing control (range gate control) in which the light emission timing and the exposure timing have been synchronized according to the target distance. In addition, a camera that acquires target distance images by range gate control in this manner is referred to as a range gated camera.

First, the horizontal axis will be explained. Haze 610 exists from the distance x1 to the distance x2, and a vehicle 620 exists at the distance x3. In addition, In FIG. 4, during the range gate control, the position of the camera 100 is made the starting point, and range gated images are acquired in a predetermined distance range from this starting point.

In this case, the target distance range R is the target distance range in which image capturing should be performed. At this time, the vehicle 620 exists within the target distance range R. In addition, the subject image of the target distance range R is photoelectrically converted in the photoelectric conversion element 102, and thereby maintained as an electric charge in each pixel.

Next, the vertical axis will be explained. The time 0 is made the light emission start timing in the light emitting device 200, and the time tf is made the light emission completion timing. At this time, the light emission period becomes tf. In addition, the position of the camera 100 is made the starting point, and the exposure start time (electric charge accumulation start time) for a case in which range gated images will be acquired in the target distance range R from this starting point is made a time t1, and the exposure completion time (the electric charge accumulation completion time) is made a time t2.

The time t1 is the timing at which the irradiated light that has been irradiated from the light emitting device 200 at the time 0 has returned to the camera 100 as light that has been reflected off of the vehicle 20. In addition, t2 is the timing at which the irradiated light that has been irradiated from the light emitting device 200 has returned to the camera 100 as light that has been reflected off of a location that is exactly the target distance range R from the distance D.

Furthermore, the timing at which the initial reflected light returns to the camera 100 is made the time t3, and the timing at which the final reflected light from the haze 610 returns to the camera 100 is made the time t4.

During the range gate control, exposure (electric charge accumulation) is not performed during the period from the time t3, at which the reflected light from the haze 610 reaches the camera 100, until the time t4, and exposure (electric charge accumulation) is performed only during the period from the time t1, at which the reflected light for exactly the target distance range R from the distance D reaches the camera 100, until the time t2. It is thereby possible to clearly acquire images of the vehicle 620 while removing the haze 610.

In this context, an explanation is given in relation to the time until the light that has reflected off of subjects that exist in the distance x returns to the camera 100. The timing at which the irradiated light for which light emission was started at the time 0 has been reflected off of around a subject that exists at the distance x returns to the image capturing unit is made the time tr.

At this time, the relationship between the timing time tr at which the reflected light returns to the image capturing unit and the distance x for the image capturing subject becomes the following Formula 2.

$$\text{time } tr = 2x/\text{speed of light } c \text{ (approx. } 3 \times 10 \hat{\ } 8\text{m/s)} \dots \text{(Formula 2)}$$

As is shown in FIG. 4, when the image capturing range has been made the target distance range R from the distance D, the exposure (electric charge accumulation) timing time t1 for the starting point of the target distance range R can be found using the following Formula 3 by substituting the distance D in the distance x of the above Formula (2).

$$\text{time } t1 = 2D/\text{speed of light } c \dots \text{(Formula 3)}$$

In addition, the exposure (electric charge accumulation) timing time t2 for the end point of the target distance range R can be found as shown in the following Formula 4 by substituting the distance D+R for the distance x in the above Formula (2), and adding the time tf to this.

$$t2 = tf+2(D+R)/\text{speed of light } c \dots \text{(Formula 4)}$$

In this manner, a range gate control is realized that is able to clearly capture images of a subject that is at a target distance even if there is haze and the like between the camera and the target distance by controlling the time tr from light emission until exposure (electric charge accumulation) according to the distance x (target distance) that the user would like to capture images of.

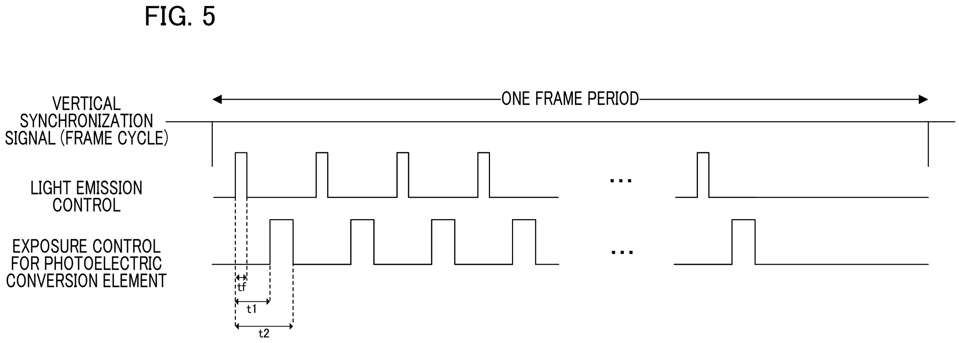

FIG. 5 is a diagram showing an example of light emission and exposure (electric charge accumulation) control operations for a one frame time period during range gate control, and explains control operations for obtaining a range gated image for a one frame time period.

In FIG.5, the vertical synchronization signal represents an image capturing frame cycle, and the time period from a low pulse until the next low pulse is a one frame time period. The light emission control represents the light emission timing in the light emitting unit 201, and the exposure (electric charge accumulation) control for the photoelectric conversion element represents the length of the exposure (electric charge accumulation) period for each frame of the photoelectric conversion element, and the control signal timing that are output by the camera control unit 105.

During the range gate control, the light emission period is controlled in a pulsed state by the camera control unit 105, and the exposure (electric charge accumulation) of the photoelectric conversion element 102 is performed for just the reflected light for the light from a specific target distance range R.

In this context, the light emission period from the beginning until the end of the light emission is made tf, the time from the beginning of the light emission until the beginning of the exposure (electric charge accumulation) is made t1, and the time from the beginning of the light emission until the end of the exposure (electric charge accumulation) is made t2. In this case, the time t1 represents the period from when the light emission begins, until the light reaches the specific target distance range R and the light that has been reflected returns to the camera 100, and the time period from t1 to t2 becomes the period during which the reflected light for the specific target distance range is exposed.

In order to correctly perform the range gate control, it is necessary to synchronize the timing for the beginning of light emission and the beginning of exposure to match the range of the predetermined target distance. In the present embodiment, the camera control unit 105 synchronizes the timing for the beginning of light emission and the beginning of exposure with the range of the predetermined target distance by transmitting the same reference signal to the photoelectric conversion element 102 and the light emission control unit 202.

As is shown by the light emission control in the timing chart of FIG. 5, the period from the beginning of light emission until the beginning of the next light emission becomes a range gate operation cycle. In addition, the light that has been received by the photoelectric conversion element 102 during one range gate operation cycle is converted into an electric charge and held inside of the photoelectric conversion element 102.

In this state, the next range gate operation cycle is executed, the light that has been newly received by the photoelectric conversion element 102 is converted into an electric charge, and this electric charge is added to the electric charge that has been held in the photoelectric conversion element 102. Note that the interval from the light emission until the next light emission is set based on the time period until the reflected light has been sufficiently attenuated and returned to the camera 100.

As is shown in FIG. 5, within a one frame time period, the range gate operations cycle is executed a predetermined number of times that has been set, the electric charge that has been held after the final addition thereto during the one frame time period is sent to the memory within the photoelectric conversion element 102, and after this the electric charge that has been added to and held is reset.

In this manner, in the present embodiment, the exposure (electric charge accumulation) period is synchronized with the light emission by the light emitting device 200, and therefore, it is possible to obtain clear images in a targeted distance range even in poor weather conditions such as haze and the like.

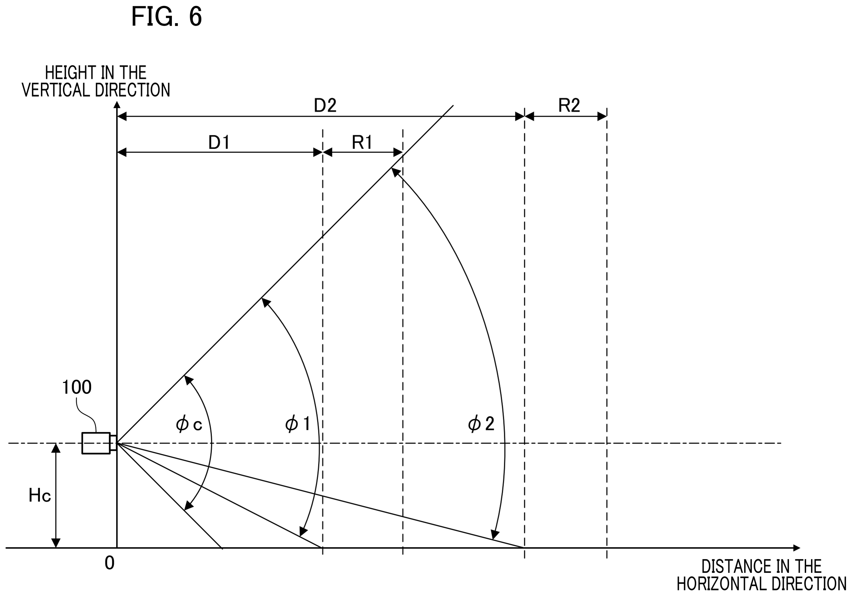

Next, the calculation method for the image range in which the image processing unit 103 and the distance measurement unit 104 will perform calculation processing based on the image signal that was image captured during the range gate control in the present embodiment will be explained using FIG. 6, FIG. 7, and FIG. 8.

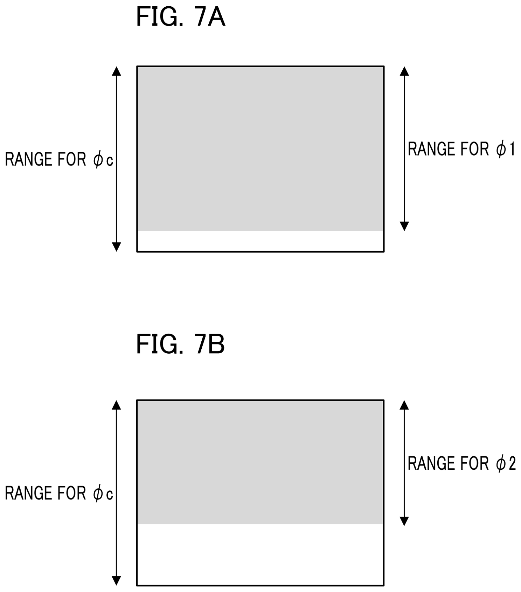

FIG. 6 is a diagram showing an example of the relationship between the ranged range and the image capturing angle of view at the time of image capturing during range gate control according to the First Embodiment. The horizontal axis is the distance in the horizontal direction from the camera 100, and the vertical axis is the height in the vertical direction from the surface of the ground. In addition, FIGS. 7 (A), and (B) are diagrams showing image capturing ranges that are obtained at the time of image capturing during range gate control according to the First Embodiment.

The posture and position of the camera 100 are positioned such that the optical axis of the image forming optical system 101 is parallel to the horizontal direction, and the height in the vertical direction from the surface of the ground becomes Hc. $\Phi c$ is the angle of view in the vertical direction for the camera 100, and has an angle of view that is symmetrical to the optical axis of the image forming optical system 101.

$\Phi 1$ is the angle of view range in which image capturing is possible when the distance D1, and the ranged range R1 are image captured during range gate control, and the range for $\Phi 1$ becomes the following Formula 5.

$$\Phi 1 = atan(Hc/D1) + atan(\Phi c/2) \ldots (Formula\ 5)$$

The image that is image captured at this time is an image in which a range corresponding to the $\Phi 1$ in which the downward side in the vertical direction has become more narrow in relation to the vertical direction range of the image corresponding to $\Phi c$ is obtained as an image, as is shown in FIG. 7 (A). Note that the upward direction in FIGS. 7 (A), and (B) represents the upward direction of the subject, that is, the direction of the height in the vertical direction, and represents the downward direction in the light receiving surface of the photoelectric conversion element 102. This is because the subject images are formed with the upward direction and the downward direction reversed on the light receiving surface of the photoelectric conversion element 102 by the image forming optical system 101.

$\Phi 2$ is the angle of view range in which image capturing is possible when image capturing is performed for the distance D2, and the ranged range R2 during range gate control, and the range for $\Phi 2$ becomes the following Formula 6.

$$\Phi 2 = atan\ (HC/D2) + atan(\Phi c/2) \ldots (Formula\ 6)$$

The images that are captured at this time are images in which, as is shown in FIG. 7(B), a range corresponding to $\Phi 2$ in which the lower side in the vertical direction has become more narrow in relation to the vertical direction range for an image corresponding to $\Phi c$ is obtained as an image.

D2>D1, and therefore, based on the Formula 5 and the Formula 6, $\Phi 2 < \Phi 1$. Therefore, the vertical direction range of the image that is being captured is more narrow at the time for distance D2, which is farther away, than for the time for the distance D1.

Therefore, in the present embodiment, the calculating operations range is determined based on the distance for the subject on the side that is close to the image capturing unit. That is, from among the predetermined distance range, the larger that the distance for the subject on the side that is close to the image capturing unit is, the smaller a range the calculating operations range is made. In addition, from among the predetermined distance range, the larger that the distance for the subject on the side that is close to the image capturing unit is, the smaller that the calculating operations range is made in the up-down direction of the image.

Furthermore, from among the predetermined distance range, the larger that the distance for the subject on the side that is close to the image capturing unit is, the calculating operations range is made a range that is close to the upward direction of the subject in the image. Note that in this context, a range that is close to the upward direction of the subject in the image means a range that is near the upper side of the subject in the image, as is shown in FIG. 7 (B).

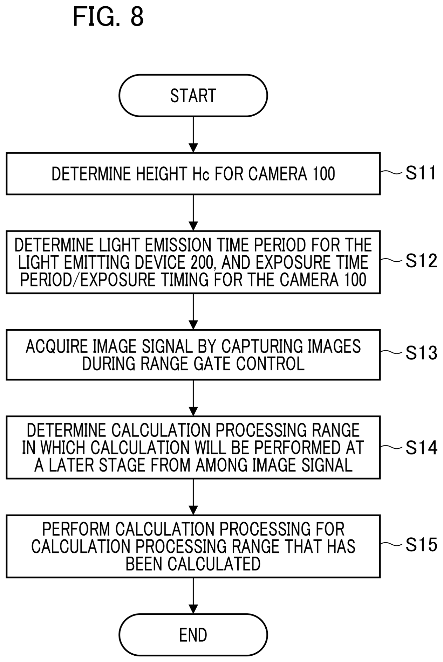

FIG. 8 is a flowchart showing a processing example for the image capturing method according to the First Embodiment. Note that below, although a case is explained in which the distance D1, and the ranged range R1 are image captured, the processing flow is also the same for cases in which the distance D, and the ranged range R2 are image captured.

First, during step S11, the camera control unit 105 determines the height Hc in the vertical direction from the surface of the ground for the camera 100. In this context, the height in the vertical direction of the camera 100 from the surface of the ground from when the camera 100 was mounted onto the movable apparatus 300, which was at rest on the surface of the ground, is used as Hc. This value reads out and uses a value that was recorded in advance in the storage unit 106 as a prescribed value.

Next, during step S12, the camera control unit 105 determines the light emission time period for the light emitting device 200, the exposure (electric charge accumulation) time for the camera 10, and the exposure (electric charge accumulation) timing in order to capture images of the distance D1 and the ranged range R1 during the range gate control.

Next, during step S13, the camera control unit 105 acquires the image signal by performing image capturing during range gate control. That is, the light emitting device 200 and the photoelectric conversion element 102 are operated so as to perform image capturing during range gate control at the light emission time period, exposure time period, and exposure timing that were determined during step S12. The image signal for the distance D1, and the ranged range R1 is thereby acquired by the photoelectric conversion element 102, and input into the image processing unit 103.

Next, during step S14, from among the image capturing signals, a calculation processing range in which calculation processing will be performed at a later stage is determined. That is, the camera control unit 105 determines from among the image signal that has been acquired, the calculation processing range in which the image processing unit 103 and distance measurement unit 104 that serve as a calculating unit will perform processing at a later stage. In this manner, the camera control unit 105 that serves as a control unit determines the calculation processing range in which calculation processing will be performed based on a predetermined distance range during step S14 (a control step).

In this context, the range $\Phi1$ in which image capturing of the ranged range R1 for the distance D1 is possible during range gate control is calculated using the above described Formula 5, and the image range corresponding to $\Phi1$ is determined as the calculation processing range in which calculation processing will be performed. The calculation processing range that has been determined in this manner is input into the image processing unit 103 and the distance measurement unit 104 from the camera control unit 105.

Next, during step S15 the image processing unit 103 and the distance measurement unit 104 perform the predetermined calculation processing (image processing, image recognition, distance measurement, and the like) with respect to the calculation processing range that was determined in step S14. In this context, step S15 functions as a calculation processing step during which predetermined calculation processing is performed on the images that are obtained from the image signal.

In this manner, in the present embodiment, a decrease in the calculation processing amount for the image signal processing is made possible by changing, according to the distance D for the range gated image capturing, the calculation processing range in which image signal processing will be performed in the calculation unit at a later stage.

<Second Embodiment>

Below, the Second Embodiment of the present disclosure will be explained. In the present embodiment, in the contents that were explained in the First Embodiment, the height of the subject is further considered during the calculation of the range for the image processing region in which image signal processing will be performed. Note that explanations will be omitted for portions of the Second Embodiment that are the same as portions of the First Embodiment.

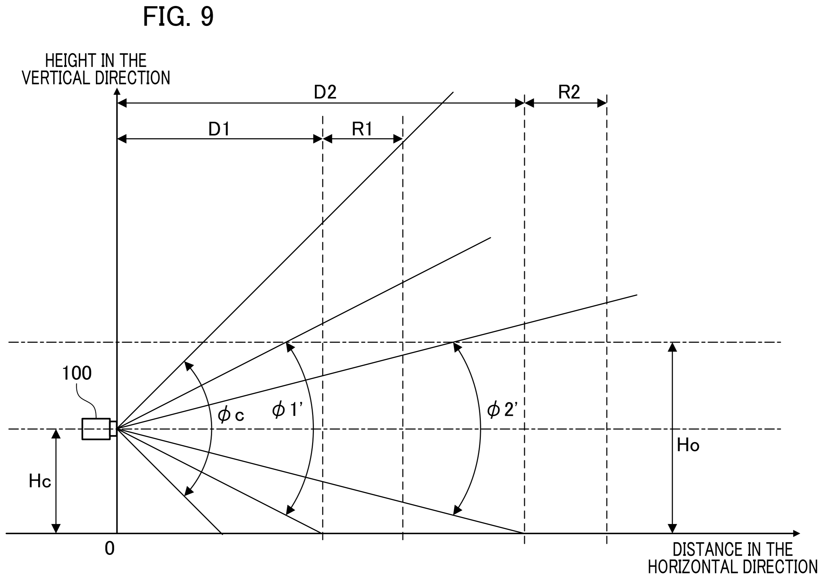

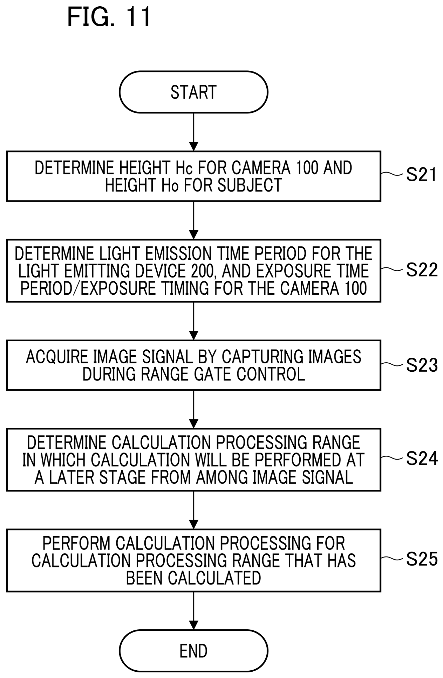

In the Second Embodiment, the calculation method for the calculation processing range in which calculation processing will be performed by the image processing unit 103, and the distance measurement unit 104, which are the calculation unit, at a later stage based on the image signal that has been image captured during range gate control will be explained using FIG. 9, FIG. 10., and FIG. 11.

FIG. 9 is a diagram showing an example of a relationship between a ranged range and an image capturing angle of view at the time of image capturing during range gate control according to the Second Embodiment, and the horizontal axis is the distance in the horizontal direction from the camera 100, and the vertical axis is the height in the vertical direction from the surface of the ground.

The posture and position of the camera 100 are positioned such that the optical axis of the image forming optical system 101 is parallel to the horizontal direction, and the height in the vertical direction from the surface of the ground becomes Hc. $\Phi c$ is the angle of view in the vertical direction for the camera 100, and becomes symmetrical to the optical axis of the image capturing optical system 101. Ho is the subject height range, and is the height of the subject that is made the target for image capturing and distance measurement in the camera 100.

$\Phi1'$ is the angle of view range in which image capturing is possible when the distance D1, and the ranged range R1 are image captured during range gate control, and the range for $\Phi1'$ is represented by, for example, the following Formula 7.

$$\Phi1' = atan(Hc/D1) + atan((Ho-Hc)/D1)) \ \dots \ (Formula \ 7)$$

FIGS. 10 (A), and (B) are images showing examples of image ranges that are obtained at the time of image capturing during range gate control according to the Second Embodiment. The images that are captured in the above-described case become a range corresponding to a $\Phi1'$ in which the upper side and lower side of the vertical direction have been made more narrow in relation to the vertical direction range for the image corresponding to $\Phi c$, as is shown in FIG. 10 (A).

$\Phi2'$ is the angle of view range in which it is possible to capture images when the distance D2 and the ranged range R2 are being image captured during range gate control, and the range for $\Phi2'$ is represented by, for example, the following Formula 8.

$$\Phi2'=atan\ (Hc/D2)+atan((Ho-Hc)/D2)\ \dots\ (Formula\ 8)$$

The images that are captured at this time become a range that corresponds to a $\Phi2'$ in which the upper side and the lower side of the vertical direction has been made more narrow in relation to the vertical direction range of the image corresponding to $\Phi c$, as is shown in FIG. 10 (B).

D2>D1, and therefore, based on the Formula 7 and the Formula 8, $\Phi2'<\Phi1'$. Therefore, the vertical direction range of the image that is being captured is more narrow for the case of the distance D2, which is farther away, than for the case of the distance D1.

FIG. 11 is a flowchart showing a processing example for an image capturing method according to the Second Embodiment. Note that below, although an explanation is given for a case in which the distance D1 and the ranged range R1 are image captured, the processing flow is also the same for a case in which the distance D2, and the range R2 are image captured.

First, during step S21, the camera control unit 105 determines the height Hc in the vertical direction from the surface of the ground for the camera 100. In this context, the height of the vertical direction for the camera 100 from the surface of the ground from when the camera 100 was mounted onto the movable apparatus 300, which was at rest on the surface of the ground, is used as Hc. This value reads out and uses a value that was recorded in advance in the storage unit 106 as a prescribed value.

In addition, during step S21, the camera control unit 105 acquires the height Ho of the subject. As the method of acquisition, the height Ho of the subject may be estimated based on image recognition for a previous field, and in a case in which the height Ho of the subject is known in advance, this is read out of, for example, a memory.

Next, during step S22, the camera control unit 105 determines the light emission time period for the light emitting device 200, the exposure (electric charge accumulation) time period for the camera 100, and the exposure (electric charge accumulation) timing in order to capture images of the distance D1 and the ranged range R1 during the range gate control.

Next, during step S23, the camera control unit 105 operates the light emitting device 200 and the photoelectric conversion element 102 so as to perform image capturing during range gate control during the light emission time period, exposure time period, and exposure timing that were determined during step S22. The image signal is thereby acquired by the photoelectric conversion element 102 and input into the image processing unit 103.

Next, during step S24, the calculation processing range in which calculation processing will be performed at a later stage is determined from among the image signal. That is, the camera control unit 105 determines, from among the image signal that has been acquired, the calculation processing range in which the image processing unit 103 and distance measurement unit 104 that serve as a calculating unit will perform processing at a later stage.

In this context, the range $\Phi1'$ in which image capturing of the distance D1, and the ranged range R1 is possible during range gate control is calculated using the above described Formula 7, and the image range corresponding to $\Phi1'$ is determined as the calculation processing range in which calculation processing will be performed. The calculation processing range that has been determined in this manner is input into the image processing unit 103 and the distance measurement unit 104 from the camera control unit 105.

Next, during step S25, the image processing unit 103 and the distance measurement unit 104 perform the calculation processing for the image signal with respect to the calculation processing range that was determined in step S24.

In this manner, in the Second Embodiment, it is possible to reduce the calculation processing amount for the image signal processing by changing the calculation processing range in which calculation processing will be performed at a later stage in the calculations unit according to the distance D for the range gated image capturing, and the subject height that was acquired in advance.

Note that, for example, the posture of the camera 100 may also have an angle that is not parallel to the horizontal direction, and the height Hc in the vertical direction may also be a height that is measured in real time at the time of movement instead of when the movable apparatus 300 is at rest.

That is, the fluctuations in the posture of the movable apparatus 300 may be measured in real time using a posture sensor and the like, and the posture and height of the camera 100 may be corrected based on this. In addition, the angle of view in the vertical direction of the camera 100 may also be non-symmetrical in relation to the optical axis.

In addition, the range in which image capturing is performed by the range gate control may also be a plurality of distances, and a plurality of ranges. Even in this case, it is sufficient if the image capturing angle of view is calculated by taking into consideration the posture, vertical direction angle of view, image capturing range due to range gate control, and the like of the camera 100 using the same approach that was explained above.

In addition, the calculation processing range in which calculation processing is performed in the calculations unit at a later stage is not limited to the above-explained determination method, and for example, it may also be made such that the calculation processing range is selected based on the image capturing distance for the range control and the like from among a plurality of calculation processing ranges that have been determined in advance.

Note that in the above explained embodiments, the size of a portion of the calculation processing range for performing calculation processing is determined from among an image for one frame that is generated from all of the pixels that have been read out from the photoelectric conversion element 102 based on the predetermined distance range.

However, it may also be made such that a determination is performed such that the readout range for the signal that is read out from the photoelectric conversion element 102 in order to perform the calculation processing is changed based on the predetermined distance range. That is, in a case in which the calculation processing range is small, it may also be made such that only the signal for the pixel range corresponding to the size of a portion of the calculation processing range for performing the calculation processing is read out, without reading out the signals for all of the pixels from the photoelectric conversion element 102, and the readout range for the pixel signals may also be made smaller.

While the present disclosure has been described with reference to embodiments, it is to be understood that the disclosure is not limited to the disclosed embodiments. The scope of the following claims is to be accorded the broadest interpretation so as to encompass all such modifications and equivalent structures and functions.

In addition, as a part or the whole of the control according to the embodiments, a computer program realizing the function of the embodiments described above may be supplied to the image capturing apparatus and the like through a network or various storage media. Then, a computer (or a CPU, an MPU, or the like) of the image capturing apparatus and the like may be configured to read and execute the program. In such a case, the program and the storage medium storing the program configure the present disclosure.

In addition, the present disclosure includes those realized using at least one processor or circuit configured to perform functions of the embodiments explained above. For example, a plurality of processors may be used for distribution processing to perform functions of the embodiments explained above.

This application claims the benefit of Japanese Patent Application No. 2025-008943, filed on January 22, 2025, which is hereby incorporated by reference herein in its entirety.

**Claims**

1. An image capturing apparatus comprising:

   a light emitting unit configured to emit pulsed light;
   an image capturing unit configured to expose reflected light in which the pulsed light has been reflected from around a subject, and generate an image signal;
   control unit configured to perform control of a light emission timing for the light emitting unit and an exposure timing for the image capturing unit such that the image capturing unit exposes light that has been reflected from a subject in a predetermined distance range from the image capturing unit; and
   a calculation processing unit configured to perform predetermined calculation processing on images obtained from the image signal;
   wherein the control unit is configured to determine a calculation processing range in which the calculation processing will be performed based on the predetermined distance range.

2. The image capturing apparatus according to claim 1, wherein the control unit is configured to determine the calculation processing range based on a distance of a subject on a side close to the image capturing unit from among the predetermined distance range.

3. The image capturing apparatus according to claim 1 or 2, wherein the control unit is configured to determine a calculation processing range so that the larger that a distance for a subject on a side close to the image capturing unit from among the predetermined distance range is, the smaller a range the calculation processing range is made.

4. The image capturing apparatus according to claim 3, wherein the control unit is configured to determine a calculation processing range so that the larger that a distance for a subject on a side close to the image capturing unit from among the predetermined distance range is, the smaller a range in the up-down direction of the image the calculation processing range is made.

5. The image capturing apparatus according to any one of claims 1 to 4, wherein the control unit is configured to determine a calculation processing range so that the larger that a distance for a subject on a side close to the image capturing unit from among the predetermined distance range is, the calculation processing range is made a range that is close to the upward direction of a subject in the image.

6. An image capturing method for controlling a light emitting unit configured to emit pulsed light and an image capturing unit configured to expose reflected light in which the pulsed light has been reflected from around a subject, and generate an image signal, the image capturing method comprising:

controlling a light emission timing for the light emitting unit and an exposure timing for the image capturing unit such that the image capturing unit exposes light that has been reflected from a subject in a predetermined distance range from the image capturing unit;
performing predetermined calculation processing on images obtained from the image signal; and
determining a calculation processing range in which the calculation processing will be performed based on the predetermined distance range.

7. A computer readable storage medium configured to store a computer program for a light emitting unit configured to emit pulsed light and an image capturing unit configured to expose reflected light in which the pulsed light has been reflected from around a subject, and generate an image signal, wherein the computer program comprises instructions for executing following processes:

controlling a light emission timing for the light emitting unit and an exposure timing for the image capturing unit such that the image capturing unit exposes light that has been reflected from a subject in a predetermined distance range from the image capturing unit;
performing predetermined calculation processing on images obtained from the image signal; and
determining a calculation processing range in which the calculation processing will be performed based on the predetermined distance range.

## FIG. 1

CAMERA — 100

IMAGE FORMING OPTICAL SYSTEM — 101

PHOTOELECTRIC CONVERSION ELEMENT — 102

IMAGE PROCESSING UNIT — 103

DISTANCE MEASUREMENT UNIT — 104

CAMERA CONTROL UNIT — 105

STORAGE UNIT — 106

COMMUNICATIONS UNIT — 107

ECU — 301

VEHICLE CONTROL UNIT — 302

DISPLAY UNIT — 303

300

LIGHT EMITTING DEVICE

LIGHT EMITTING UNIT — 201

LIGHT EMISSION CONTROL UNIT — 202

COMMUNICATIONS UNIT — 203

200

EP 4 782 878 A1

14

# FIG. 2A

INFRARED PIXEL IR    INFRARED PIXEL IR

102

400

412

411

INFRARED PIXEL IR    INFRARED PIXEL IR

# FIG. 2B

INFRARED PIXEL IR1    INFRARED PIXEL IR2

413

414

415

411  412

## FIG. 3A

500

510

520

414

415

412

411

413

INFRARED
PIXEL
IR

## FIG. 3B

511

101

102

521

u

v

w

## FIG. 3C

511

101

102

521

u

v

w

## FIG. 3D

511

101

102

521

u

v

w

FIG. 4

# FIG. 5

EP 4 782 878 A1

FIG. 6

FIG. 7A

RANGE FOR $\phi$c

RANGE FOR $\phi$1

FIG. 7B

RANGE FOR $\phi$c

RANGE FOR $\phi$2

# FIG. 8

```
        ┌─────────────┐
        │    START    │
        └──────┬──────┘
               │
               ▼
┌─────────────────────────────────────┐
│  DETERMINE HEIGHT Hc FOR CAMERA 100  │────S11
└──────────────────┬──────────────────┘
                   │
                   ▼
┌─────────────────────────────────────┐
│  DETERMINE LIGHT EMISSION TIME       │
│  PERIOD FOR THE LIGHT EMITTING       │────S12
│  DEVICE 200, AND EXPOSURE TIME       │
│  PERIOD/EXPOSURE TIMING FOR THE      │
│  CAMERA 100                          │
└──────────────────┬──────────────────┘
                   │
                   ▼
┌─────────────────────────────────────┐
│  ACQUIRE IMAGE SIGNAL BY CAPTURING   │
│  IMAGES DURING RANGE GATE CONTROL    │────S13
└──────────────────┬──────────────────┘
                   │
                   ▼
┌─────────────────────────────────────┐
│  DETERMINE CALCULATION PROCESSING    │
│  RANGE IN WHICH CALCULATION WILL BE  │────S14
│  PERFORMED AT A LATER STAGE FROM     │
│  AMONG IMAGE SIGNAL                  │
└──────────────────┬──────────────────┘
                   │
                   ▼
┌─────────────────────────────────────┐
│  PERFORM CALCULATION PROCESSING FOR  │
│  CALCULATION PROCESSING RANGE THAT   │────S15
│  HAS BEEN CALCULATED                 │
└──────────────────┬──────────────────┘
                   │
                   ▼
        ┌─────────────┐
        │     END     │
        └─────────────┘
```

FIG. 9

EP 4 782 878 A1

FIG. 10A

RANGE FOR $\phi c$

RANGE FOR $\phi 1'$

FIG. 10B

RANGE FOR $\phi c$

RANGE FOR $\phi 2'$

# FIG. 11

```
                    ┌─────────────┐
                    │    START    │
                    └──────┬──────┘
                           │
                           ▼
┌──────────────────────────────────────────┐
│   DETERMINE HEIGHT Hc FOR CAMERA 100 AND  │ ～S21
│         HEIGHT Ho FOR SUBJECT             │
└──────────────────┬───────────────────────┘
                   │
                   ▼
┌──────────────────────────────────────────┐
│ DETERMINE LIGHT EMISSION TIME PERIOD FOR  │
│  THE LIGHT EMITTING DEVICE 200, AND       │ ～S22
│  EXPOSURE TIME PERIOD/EXPOSURE TIMING     │
│         FOR THE CAMERA 100                 │
└──────────────────┬───────────────────────┘
                   │
                   ▼
┌──────────────────────────────────────────┐
│ ACQUIRE IMAGE SIGNAL BY CAPTURING IMAGES  │ ～S23
│      DURING RANGE GATE CONTROL            │
└──────────────────┬───────────────────────┘
                   │
                   ▼
┌──────────────────────────────────────────┐
│  DETERMINE CALCULATION PROCESSING RANGE   │
│ IN WHICH CALCULATION WILL BE PERFORMED AT │ ～S24
│ A LATER STAGE FROM AMONG IMAGE SIGNAL     │
└──────────────────┬───────────────────────┘
                   │
                   ▼
┌──────────────────────────────────────────┐
│   PERFORM CALCULATION PROCESSING FOR      │
│ CALCULATION PROCESSING RANGE THAT HAS     │ ～S25
│            BEEN CALCULATED                 │
└──────────────────┬───────────────────────┘
                   │
                   ▼
             ┌─────────────┐
             │     END     │
             └─────────────┘
```

Europäisches
Patentamt
European
Patent Office
Office européen
des brevets

# EUROPEAN SEARCH REPORT

**Application Number**

EP 25 22 7364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 896 645 A1 (KOITO MFG CO LTD [JP]) 20 October 2021 (2021-10-20) * figures 13,14,17A-C,28A-B * * paragraph [0092] - paragraph [0095] * * paragraph [0103] - paragraph [0115] * * paragraph [0168] * ----- | 1-7 | INV. G01S7/487 G01S17/18 G01S17/46 G01S17/89 |
| A | EP 4 286 895 A1 (KOITO MFG CO LTD [JP]) 6 December 2023 (2023-12-06) * figures 1, 5A-B * * paragraph [0071] - paragraph [0079] * ----- | 1-7 | |
| A | EP 4 184 242 A1 (KOITO MFG CO LTD [JP]) 24 May 2023 (2023-05-24) * figures 1,5A-C * * paragraph [0054] - paragraph [0067] * ----- | 1-7 | |

**TECHNICAL FIELDS SEARCHED (IPC)**

G01S

The present search report has been drawn up for all claims

| Place of search | Date of completion of the search | Examiner |
|---|---|---|
| Munich | 2 June 2026 | Töpfer, Nils-Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 7364

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2026

| Patent document cited in search report | | Publication date | Patent family member(s) | Publication date |
|---|---|---|---|---|
| EP 3896645 | A1 | 20-10-2021 | CN 113243016 A | 10-08-2021 |
| | | | EP 3896645 A1 | 20-10-2021 |
| | | | JP 7369921 B2 | 27-10-2023 |
| | | | JP WO2020121973 A1 | 28-10-2021 |
| | | | US 2021295065 A1 | 23-09-2021 |
| | | | WO 2020121973 A1 | 18-06-2020 |
| EP 4286895 | A1 | 06-12-2023 | EP 4286895 A1 | 06-12-2023 |
| | | | JP 7746307 B2 | 30-09-2025 |
| | | | JP WO2022163721 A1 | 04-08-2022 |
| | | | US 2024083346 A1 | 14-03-2024 |
| | | | WO 2022163721 A1 | 04-08-2022 |
| EP 4184242 | A1 | 24-05-2023 | CN 116235108 A | 06-06-2023 |
| | | | EP 4184242 A1 | 24-05-2023 |
| | | | JP 7653436 B2 | 28-03-2025 |
| | | | JP WO2022014416 A1 | 20-01-2022 |
| | | | US 2023341749 A1 | 26-10-2023 |
| | | | WO 2022014416 A1 | 20-01-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6293134 B
- JP 2025008943 A